# DEMANDE DE BREVET EUROPEEN

(11) **EP 2 745 677 A1**
(43) Date de publication de la demande: **25.06.2014**
(21) Numéro de dépôt: 13197653.2
(22) Date de dépôt: 17.12.2013
(51) Int. Cl.: A01G 9/02, A01G 27/02

(54) **Élément modulaire pour culture en bac et installation intégrant au moins un TEL élément**

(30) Priorité: 21.12.2012 FR 1262586
(71) Demandeur: C.B.D.C. Investissements, 49000 Angers (FR)
(72) Inventeur: Bureau du Colombier, Christian, 49000 Angers (FR)
(74) Mandataire: Godineau, Valérie

(57) **Abrégé**

Elément (1) modulaire pour culture en bac comprenant, à l'état monté, au moins (2) un bac de culture sensiblement parallélépipédique présentant deux paires de parois (21) latérales en regard et un fond, chaque paroi (21) latérale étant formée d'une première série de lames (4) pour la première paire de parois (21) latérales, et, d'une deuxième série de lames (4) pour la deuxième paire de parois (21) latérales.

Les lames (4) de la première et de la deuxième série sont assemblées à angle droit par emboîtement d'entailles (411) ménagées sur les bords longitudinaux des lames (4) desdites séries de lames, chaque série de lames (4) formant, à l'état assemblé des séries de lames, un empilement à claire-voie, et en ce que le fond du bac est formé par une troisième série (51) de lames (5) reliant entre elles deux parois (21) latérales en regard en s'insérant dans l'espace laissé libre entre deux lames (4) superposées des séries de lames constitutives desdites parois (21) latérales en regard.

## Description

La présente invention concerne un élément modulaire pour culture en bac, et une installation intégrant au moins un tel élément.

Elle concerne plus particulièrement, un élément modulaire pré-monté, ou prêt à monter, comprenant, à l'état monté, au moins un bac de culture sensiblement parallélépipédique présentant deux paires de parois latérales en regard et un fond, chaque paroi latérale étant formée d'une série de lames appelées, pour la première paire de parois latérales, première série de lames et, pour la deuxième paire de parois latérales, deuxième série de lames.

Jusqu'à présent les bacs de culture, réalisés à partir de lames, sont formés par un assemblage de type rainure/languette desdites lames entre elles. L'assemblage des lames est un assemblage jointif et le fond du bac est nécessairement disposé à la base de l'empilement de lames. Il en résulte l'impossibilité de régler la profondeur du bac de sorte qu'une quantité importante de substrat de culture est parfois nécessaire pour remplir le bac en fonction de la hauteur des parois latérales.

Un but de la présente invention est de proposer un élément modulaire dont la conception permet de régler à volonté à la fois la profondeur du bac de culture et la hauteur des parois latérales du bac de culture sans nuire à la facilité de montage dudit élément.

Un autre but de la présente invention est de proposer un élément modulaire dont la conception permet un montage sans outil de la partie bac dudit élément.

Un autre but de la présente invention est de proposer un élément modulaire dont la conception permet d'agrandir aisément l'espace de culture.

Un autre but de la présente invention est de proposer un élément modulaire dont la conception permet un positionnement à une hauteur quelconque du sol dudit élément sans nuire aux autres possibilités de réglage des dimensions du bac.

A cet effet, l'invention a pour objet, un élément modulaire pour culture en bac, pré-monté ou prêt à monter, comprenant, à l'état monté, au moins un bac de culture sensiblement parallélépipédique présentant deux paires de parois latérales en regard et un fond, chaque paroi latérale étant formée d'une série de lames appelées, pour la première paire de parois latérales, première série de lames et, pour la deuxième paire de parois latérales, deuxième série de lames,
caractérisé en ce que les lames de la première série sont assemblées à angle droit avec les lames de la deuxième série par emboîtement d'entailles, dites premières entailles, ménagées sur les bords longitudinaux des lames de la première série de lames, avec des entailles, dites deuxièmes entailles, ménagées sur les bords longitudinaux de la deuxième série de lames, chaque série de lames formant, à l'état assemblé des premières et deuxièmes séries de lames, un empilement à claire-voie, et en ce que le fond du bac est formé par une troisième série de lames, les lames de cette troisième série reliant entre elles deux parois latérales en regard en s'insérant dans l'espace laissé libre entre deux lames superposées des séries de lames constitutives desdites parois latérales en regard.

Grâce au fait que les lames de la première série de lames sont assemblées à angle droit avec les lames de la deuxième série de lames par un assemblage de type mi-bois avec des premières entailles ménagées sur les bords longitudinaux des lames de la première série de lames assemblées par emboîtement avec des deuxièmes entailles ménagées sur les bords longitudinaux de la deuxième série de lames, chaque première, ou respectivement deuxième, série de lames forme, à l'état assemblé des première et deuxième séries de lames, un empilement à claire-voie qui permet de positionner les lames constitutives du fond du bac à une hauteur quelconque de la paroi latérale dans l'espace laissé libre entre deux lames de la série de lames constitutives de la paroi latérale. Il est ainsi aisé de régler la profondeur du bac quelle que soit la hauteur des parois latérales du bac.

Ainsi, l'élément peut présenter un bac de culture posé au sol nécessitant une grande hauteur des parois latérales pour permettre une culture confortable tout en minimisant la quantité de substrat de culture à utiliser grâce à un réglage de la profondeur du bac.

De préférence, à l'état monté dudit élément, les lames de la troisième série de lames font saillie à l'extérieur du bac à au moins une de leurs extrémités pour former une surface d'appui supplémentaire.

Il en résulte la possibilité d'augmenter à faible coût l'espace de culture, la ou chaque surface d'appui supplémentaire pouvant être utilisée pour la réception de jardinière ou autre.

De préférence, l'élément comporte une garniture, telle qu'une bâche, insérable à l'intérieur du bac à recouvrement au moins partiel des séries de lames à l'état monté dudit élément.

Cette garniture permet de contenir le substrat de culture et d'éviter sa fuite par l'espace laissé libre entre les lames des parois latérales.

De préférence, le point d'intersection des lames des première et deuxième séries est disposé à écartement des extrémités libres des lames pour délimiter entre extrémité libre des lames et point d'intersection des lames un logement d'angle, et l'élément comprend au moins deux montants rainurés, dits d'angle, aptes à s'insérer chacun au moins partiellement dans un logement d'angle.

La présence de montants permet un montage du bac de culture à l'état suspendu aux montants. En outre, ces montants d'angle peuvent être utilisés comme montants de réception de panneau(x) de liaison de l'élément modulaire à au moins un élément modulaire adjacent pour permettre une construction de type serre ou autre dont l'architecture peut présenter un grand nombre de configurations.

De préférence, l'élément comporte des moyens de liaison des montants d'angle au bac à l'état monté dudit élément. Les montants d'angle sont équipés de pieds réglables en hauteur. L'élément comporte au moins un panneau insérable à coulissement à l'intérieur de rainures longitudinales en regard desdits montants d'angle.

Dans un mode de réalisation préféré, les montants d'angle comportent au moins deux rainures longitudinales, et au moins l'une des rainures s'étend à l'extérieur du logement d'angle à l'état inséré du montant d'angle dans ledit logement.

Cette conception permet la réalisation de panneaux s'étendant sur toute la hauteur dudit élément modulaire ou uniquement sur la partie de la hauteur de l'élément située au-dessus du bac de culture.

De préférence, l'élément comporte un toit formé d'au moins deux longerons rainurés et d'au moins un panneau insérable à coulissement entre lesdits longerons, chaque longeron étant apte à reposer sur l'extrémité supérieure de deux montants d'angle, chaque rainure d'un longeron tendant depuis une extrémité en direction de l'autre extrémité du longeron à s'écarter d'une génératrice du longeron pour se développer, à l'état positionné horizontalement dudit longeron, de manière inclinée en formant une pente d'écoulement depuis une extrémité en direction de l'autre extrémité dudit longeron.

La présence d'un toit permet la réalisation d'un élément modulaire de type serre.

De préférence, l'élément modulaire comporte au moins un bac de collecte des eaux pluviales solidarisable au reste de l'élément et, à l'état monté de l'élément modulaire, le panneau de toit s'étend en débord d'une paroi latérale du bac de culture, à l'aplomb du bac de collecte des eaux.

De préférence, le bac de collecte est équipé d'un tuyau d'irrigation, de préférence en goutte à goutte, du contenu du bac de culture.

De préférence, l'élément comprend une réserve d'eau supplémentaire positionnable au-dessous du fond du bac de culture, et le bac de collecte comprend un conduit d'irrigation alimentant par gravité ladite réserve.

De préférence, ledit élément comprend un conduit de liaison perforé apte à s'étendre entre le bac de culture et le dessous dudit bac, ce conduit étant apte à plonger dans la réserve d'eau.

L'invention a encore pour objet une installation pour la culture de végétaux caractérisée en ce qu'elle comprend au moins deux éléments modulaires conformes à celui décrit ci-dessus et au moins un panneau de liaison desdits éléments modulaires entre eux.

L'invention a encore pour objet un procédé de construction d'un élément modulaire comprenant à l'état monté, un bac de culture sensiblement parallélépipédique, présentant deux paires de parois latérales en regard, et un fond, chaque paroi latérale étant formée d'une série de lames appelées, pour la première paire de parois latérales, première série de lames et, pour la deuxième paire de parois latérales, deuxième série de lames,
caractérisé en ce que ledit procédé comprend :
- pour la construction des parois latérales, une étape d'assemblage à angle droit des lames de la première série comportant sur au moins l'un de leurs bords longitudinaux des entailles, dites premières entailles, avec des lames de la deuxième série comportant, sur au moins l'un de leurs bords longitudinaux, des entailles, dites deuxièmes entailles, par emboîtement des premières et deuxièmes entailles de sorte que chacune desdites premières et deuxièmes séries de lames forme, à l'état assemblé desdites séries de lames, un empilement à claire-voie, et, - pour la construction du fond du bac, une étape d'insertion dans l'espace laissé libre entre deux lames superposées des premières, ou respectivement, des deuxièmes séries de lames, d'une troisième série de lames reliant entre elles deux parois latérales en regard.

L'invention sera bien comprise à la lecture de la description suivante d'exemples de réalisation, en référence aux dessins annexés dans lesquels :
La figure 1 représente une vue en perspective simplifiée d'un élément modulaire conforme à l'invention ;
La figure 2 représente une vue en perspective du bac de culture d'un élément modulaire conforme à l'invention ;

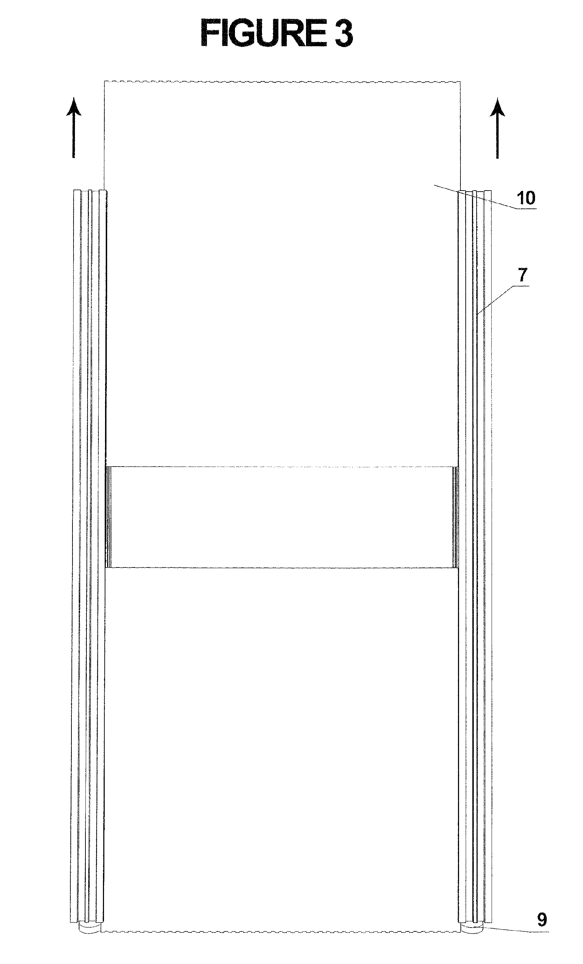

La figure 3 représente une vue de face de montants de l'élément modulaire reliés entre eux par des panneaux de liaison, dont l'un est en position ouverte ;
La figure 4 représente une vue schématique d'une première configuration d'un élément modulaire conforme à l'invention ;
La figure 5 représente une vue schématique d'une deuxième configuration d'un élément modulaire conforme à l'invention ;
La figure 6 représente une vue partielle simplifiée de dessus d'une installation formée d'au moins deux éléments modulaires conforme à l'invention.

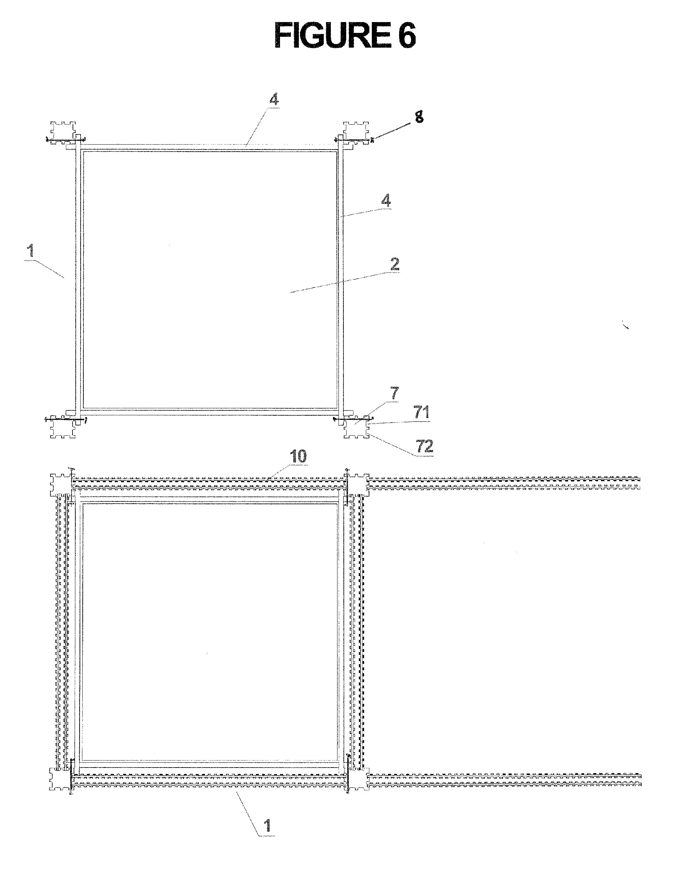

Comme mentionné ci-dessus, l'élément 1 modulaire, objet de l'invention, peut être utilisé seul ou en combinaison avec d'autres éléments 1 modulaires comme l'illustre, par exemple, la figure 6, pour former une installation de culture.

Cet élément modulaire peut indifféremment se présenter sous forme d'un élément pré-monté ou d'un ensemble prêt-à-monter. Généralement, l'élément 1 modulaire est stocké à l'état démonté, et comprend au moins une pluralité de lames 4 à entailles 411, 421 aptes à former les première et deuxième séries de lames et des lames 5 aptes à former une troisième série 51 de lames.

Cet élément 1 modulaire, à l'état démonté, peut encore comporter quatre montants 7 d'angle, deux longerons 11 rainurés, et au moins un panneau 112 insérable à coulissement entre lesdits longerons 11 pour former le toit dudit élément.

Il peut également comporter au moins un panneau 10 insérable à coulissement à l'intérieur de rainures 71, 72 longitudinales en regard des montants 7 d'angle, et au moins un bac 12 de collecte des eaux pluviales.

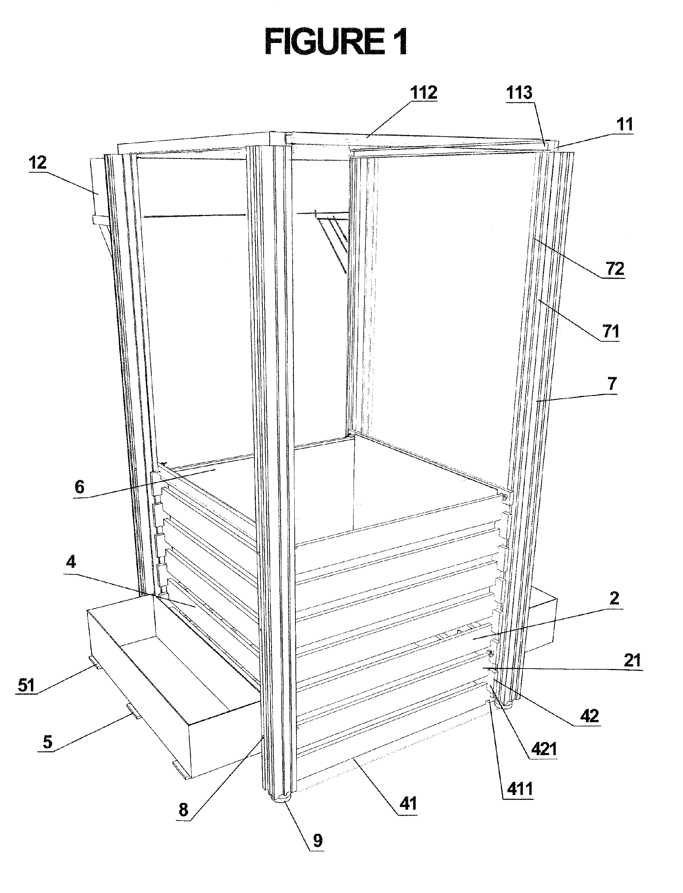

Tel est le cas de l'élément 1 modulaire destiné à se présenter à l'état monté sous forme d'un élément conforme à la figure 1.

Cet élément modulaire peut encore comprendre, à l'état démonté, au moins une conduite d'irrigation, une bâche 6, une réserve d'eau, un lombricomposteur ou autre selon la configuration retenue.

L'ensemble des moyens tels que décrits ci-dessus peut permettre la construction d'un élément 1 modulaire, par exemple conforme aux figures 1, 4 et 5. Pour permettre une telle construction, on procède généralement dans un premier temps à la construction du bac 2 de culture dudit élément 1 modulaire.

Ce bac 2 de culture est de forme parallélépipédique et présente deux paires de parois latérales 21 en regard et un fond 22. Chaque paroi 21 latérale de la première paire de parois latérales est formée par une série de lames appelée première série 41 de lames 4. Chaque paroi latérale de la deuxième paire de parois latérales est formée par une série de lames appelée deuxième série 42 de lames.

Les lames 4 des première et deuxième série comportent, le long de leurs bords longitudinaux, des entailles appelées première entaille 411 pour la première série de lames, et deuxième entaille 421 pour la deuxième série de lames. Ces lames sont généralement des lames en bois.

Dans l'exemple représenté, les lames d'extrémité de chaque série de lames comportent des entailles le long d'un seul de leurs bords longitudinaux, tandis que les lames intermédiaires c'est-à-dire disposées entre deux lames d'extrémité de chaque série de lames comportent des entailles sur chacun de leurs bords longitudinaux.

Chaque lame comporte généralement deux entailles par bord longitudinal, ces entailles étant disposées l'une au voisinage d'une extrémité, l'autre, au voisinage de l'autre extrémité, de ladite lame. Ces entailles sont délimitées par un profil en U.

Ces première et deuxième entailles sont de forme complémentaire pour permettre un assemblage desdites entailles entre elles par emboîtement. Ainsi, à l'état assemblé des lames des première et deuxième séries de lames, les U s'entrecroisent. En d'autres termes, à l'état assemblé des lames des première et deuxième séries de lames, les flancs d'une entaille d'une lame de la première série enserrent au niveau d'une entaille les faces d'une lame de la deuxième série de lames, les fonds desdites entailles venant en applique l'un contre l'autre.

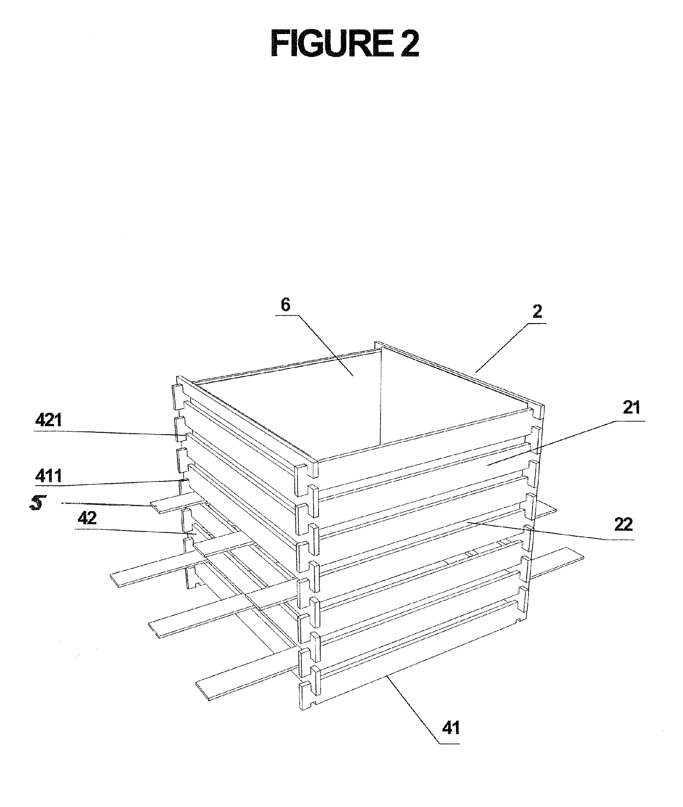

Pour permettre un tel assemblage, et comme l'illustre la figure 2, deux lames 4 appartenant chacune à une première série de lames sont disposées horizontalement en regard l'une de l'autre et reposent par leurs tranches longitudinales en appui sur le sol. Deux lames 4 appartenant chacune à une deuxième série de lames sont superposées auxdites lames des premières séries de lames en s'étendant à angle droit desdites lames, et sont assemblées auxdites lames par un assemblage à emboîtement des entailles.

Ainsi, une lame d'une deuxième série de lames est positionnée au-dessus et perpendiculairement aux lames de deux premières séries de lames en regard avec ses entailles s'étendant à la verticale d'une entaille de chacune des lames des premières séries de lames pour venir en position rapprochée desdites lames coiffer par ses entailles, des entailles des lames des premières séries de lames et s'assembler à ces dernières par emboîtement. Ce montage à emboîtement peut s'effectuer sans outils.

Il est procédé de manière similaire avec la deuxième lame de l'autre deuxième série de lames.

On obtient ainsi un cadre dont les lames de deux côtés contigus sont disposés à des niveaux différents, tandis que les lames de deux côtés parallèles sont disposées au même niveau. On procède, si nécessaire, à la pose de deux nouvelles lames des premières séries de lames et à l'assemblage de ces dernières avec les lames des deuxièmes séries de lames précédemment posées. Chaque lame d'une première ou respectivement d'une deuxième série s'assemble donc à chaque fois, par l'intermédiaire de ses entailles, avec deux lames appartenant chacune à une autre série de lames.

Cet assemblage est poursuivi jusqu'à atteindre la hauteur souhaitée pour les parois latérales du bac de culture. On insère ensuite, dans l'espace laissé libre entre deux lames des premières ou respectivement des deuxièmes séries de lames, des lames 5 d'une troisième série 51 de lames pour former le fond 22 du bac.

Ce fond 22 peut donc être réalisé à une hauteur variable par rapport aux bords supérieurs des parois latérales du bac. Le résultat obtenu est illustré à la figure 2.

On note que, dans l'exemple représenté, les lames 5 de la troisième série de lames font saillie à l'extérieur du bac 2 à au moins l'une de leurs extrémités pour former une surface d'appui supplémentaire apte à recevoir, par exemple, un bac de culture supplémentaire, tel qu'une jardinière.

Une bâche 6 est insérée à l'intérieur du bac à recouvrement de la face interne des parois latérales du bac et du fond du bac. Cette bâche délimite un contenant à l'intérieur duquel peut être introduit le substrat de culture.

Des montants 7 d'angle rainurés sont ensuite insérés entre le point d'intersection des lames des première et deuxième séries de lames et l'extrémité libre des lames, comme l'illustre la figure 1 où l'élément 1 comporte quatre montants d'angle disposés à chaque angle dudit élément. Ces montants 7 d'angle sont de section carrée ou rectangulaire et comportent ici deux rainures 71, 72 longitudinales parallèles sur chacune de leurs faces.

Chaque montant 7 d'angle présente deux faces qui s'étendent chacune en regard d'une face d'un autre montant d'angle pour former les bords longitudinaux d'un cadre entre lesquels au moins un panneau peut être inséré. Dans l'exemple représenté, l'une des rainures, en l'occurrence la rainure 71 de chaque face de montant d'angle en regard de la face d'un autre montant d'angle est disposé à l'extérieur du logement d'angle pour permettre la réception d'un panneau apte à s'étendre sur toute la hauteur du montant d'angle tandis que la rainure 72 disposée à l'intérieur du logement d'angle ne permet la réception d'un panneau coulissant que sur la partie du montant d'angle disposée au-dessus du bac 2 de culture.

Ces panneaux de liaison disposés à coulissement le long desdits montants peuvent être entraînés en déplacement à coulissement pour permettre un accès variable au bac de culture ou une aération de l'intérieur de l'enceinte délimitée par lesdits panneaux.

Les montants 7 d'angle sont ici fixés au bac 2 par boulonnage. Ces boulons forment les moyens 8 de liaison des montants 7 d'angle au bac 2. Les panneaux 10 insérables à coulissement à l'intérieur de rainures en regard des montants 7 d'angle sont de préférence réalisés sous forme de plaques transparentes ou translucides pour permettre l'assimilation dudit élément 1 modulaire à une serre, en particulier lorsque ce dernier est pourvu d'un toit 11.

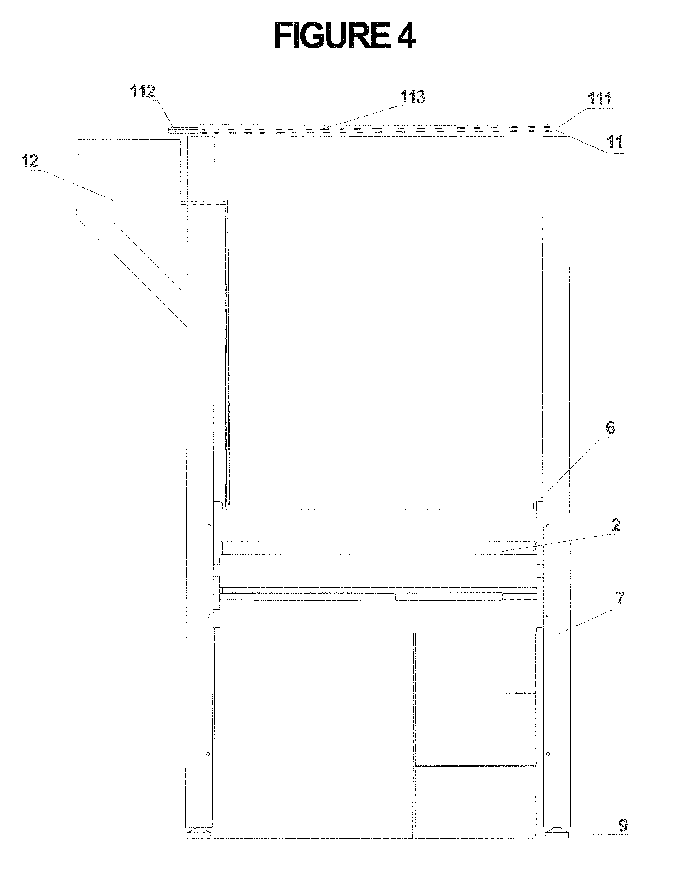

Ce toit 11 peut être formé, comme l'illustre la figure 4, de deux longerons 111 1 rainurés et d'un panneau 112 insérable à coulissement entre lesdits longerons 111. Chaque longeron 111 repose sur l'extrémité supérieure d'un montant 7 d'angle. Chaque rainure 113 d'un longeron 111 tend depuis une extrémité en direction de l'autre extrémité du longeron à s'écarter d'une génératrice du longeron 111 pour se développer à l'état positionné horizontalement dudit longeron 111 de manière inclinée en formant une pente d'écoulement depuis une extrémité en direction de l'autre extrémité dudit longeron 111.

Ainsi, le panneau disposé entre lesdits longerons est un panneau incliné qui permet de conduire les eaux pluviales en direction d'un bac 12 de collecte des eaux solidarisé audit bac de culture. Le panneau 112 de toit s'étend donc en débord d'une paroi 21 latérale du bac de culture à l'aplomb du bac 12 de collecte des eaux.

Ce bac 12 de collecte des eaux peut comporter une conduite d'irrigation alimentant le contenu du bac 2 de culture et, éventuellement, une réserve d'eau disposée sous le bac 2 de culture comme l'illustre la figure 4.

En effet, le bac 2 de culture peut être fixé aux montants 7 d'angle de manière écartée du sol pour ménager entre fond du bac 2 de culture et sol, un espace d'insertion, par exemple d'une réserve d'eau supplémentaire et d'un composteur, la réserve d'eau communiquant par l'intermédiaire de conduites d'irrigation avec le contenu du bac de culture.

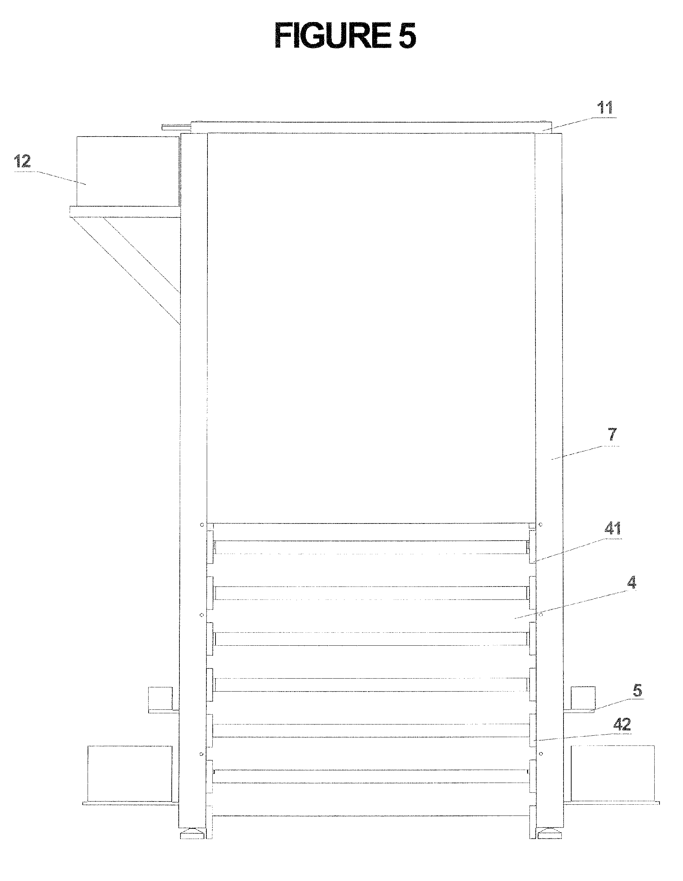

Ce bac 2 de culture peut également s'étendre depuis l'extrémité inférieure des montants 7 d'angle comme l'illustre la figure 5.

Chaque élément modulaire peut être relié via un ou plusieurs panneaux à des éléments modulaires similaires comme l'illustre la figure 6 pour former des espaces de circulation entre éléments modulaires. Un toit peut également être disposé au niveau de ces espaces de circulation.

On obtient ainsi une installation de culture dont la configuration peut être modifiée au gré des souhaits de l'utilisateur.

## Revendications

1. Elément (1) modulaire pour culture en bac, pré-monté ou prêt à monter, comprenant, à l'état monté, au moins un bac (2) de culture sensiblement parallélépipédique présentant deux paires de parois (21) latérales en regard et un fond (22), chaque paroi (21) latérale étant formée d'une série de lames (4) appelées, pour la première paire de parois (21) latérales, première série (41) de lames (4) et, pour la deuxième paire de parois (21) latérales, deuxième série (42) de lames (4),
**caractérisé en ce que** les lames (4) de la première série (41) sont assemblées à angle droit avec les lames (4) de la deuxième série (42) par emboîtement d'entailles (411), dites premières entailles (411), ménagées sur les bords longitudinaux des lames (4) de la première série (41) de lames, avec des entailles (421), dites deuxièmes entailles (421), ménagées sur les bords longitudinaux de la deuxième série (42) de lames (4), chaque série de lames (4) formant, à l'état assemblé des premières et deuxièmes séries de lames, un empilement à claire-voie, et **en ce que** le fond (22) du bac est formé par une troisième série (51) de lames (5), les lames (5) de cette troisième série (51) reliant entre elles deux parois (21) latérales en regard en s'insérant dans l'espace laissé libre entre deux lames (4) superposées des séries de lames constitutives desdites parois (21) latérales en regard.

2. Elément (1) selon la revendication 1,
**caractérisé en ce que**, à l'état monté dudit élément (1), les lames (5) de la troisième série (51) de lames font saillie à l'extérieur du bac (2) à au moins une de leurs extrémités pour former une surface d'appui supplémentaire.

3. Elément (1) selon l'une des revendications précédentes,
**caractérisé en ce qu'**il comporte une garniture, telle qu'une bâche (6), insérable à l'intérieur du bac (2), à recouvrement au moins partiel des séries (41, 42, 51) de lames à l'état monté dudit élément (1).

4. Elément (1) selon l'une des revendications précédentes,
**caractérisé en ce que** le point d'intersection des lames (4) des première et deuxième séries est disposé à écartement des extrémités libres des lames pour délimiter entre extrémité libre des lames et point d'intersection des lames un logement d'angle, et **en ce que** l'élément (1) comprend au moins deux montants (7) rainurés, dits d'angle, aptes à s'insérer chacun au moins partiellement dans un logement d'angle.

5. Elément (1) selon la revendication 4,
**caractérisé en ce qu'**il comporte des moyens (8) de liaison des montants (7) d'angle au bac (2) à l'état monté dudit élément (1).

6. Elément (1) selon l'une des revendications 4 ou 5,
**caractérisé en ce que** les montants (7) d'angle sont équipés de pieds (9) réglables en hauteur.

7. Elément (1) selon l'une des revendications 4 à 6,
**caractérisé en ce qu'**il comporte au moins un panneau (10) insérable à coulissement à l'intérieur de rainures (71 ; 72) longitudinales en regard desdits montants (7) d'angle.

8. Elément (1) selon l'une des revendications 4 à 7,
**caractérisé en ce que** les montants (7) d'angle comportent au moins deux rainures (71, 72) longitudinales, et **en ce qu'**au moins l'une (72) des rainures (71, 72) s'étend à l'extérieur du logement d'angle à l'état inséré du montant (7) d'angle dans ledit logement.

9. Elément (1) selon l'une des revendications 4 à 8,
**caractérisé en ce qu'**il comporte un toit (11) formé d'au moins deux longerons (111) rainurés et d'au moins un panneau (112) insérable à coulissement entre lesdits longerons (111), chaque longeron (111) étant apte à reposer sur l'extrémité supérieure de deux montants (7) d'angle, chaque rainure (113) d'un longeron (111) tendant depuis une extrémité en direction de l'autre extrémité du longeron (111) à s'écarter d'une génératrice du longeron (111) pour se développer, à l'état positionné horizontalement dudit longeron (111) de manière inclinée en formant une pente d'écoulement depuis une extrémité en direction de l'autre extrémité dudit longeron (111).

10. Elément (1) selon la revendication 9,
**caractérisé en ce que** l'élément (1) modulaire comporte au moins un bac (12) de collecte des eaux pluviales solidarisable au reste de l'élément (1) et **en ce que**, à l'état monté de l'élément (1) modulaire, le panneau (12) de toit s'étend en débord d'une paroi (21) latérale du bac (2) de culture, à l'aplomb du bac (12) de collecte des eaux.

11. Installation pour la culture de végétaux **caractérisée en ce qu'**elle comprend au moins deux éléments (1) modulaires conformes à l'une des revendications 1 à 10 et au moins un panneau (10) de liaison desdits éléments modulaires entre eux.

12. Procédé de construction d'un élément (1) modulaire comprenant à l'état monté, un bac (2) de culture sensiblement parallélépipédique, présentant deux paires de parois (21) latérales en regard, et un fond (22), chaque paroi (21) latérale étant formée d'une série de lames (4) appelées, pour la première paire de parois (21) latérales, première série (41) de lames (4) et, pour la deuxième paire de parois (21) latérales, deuxième série (42) de lames,
**caractérisé en ce que** ledit procédé comprend :
- pour la construction des parois (21) latérales, une étape d'assemblage à angle droit des lames (4) de la première série (41) comportant sur au moins l'un de leurs bords longitudinaux des entailles (411), dites premières entailles, avec des lames (4) de la deuxième série (42) comportant, sur au moins l'un de leurs bords longitudinaux, des entailles (421), dites deuxièmes entailles, par emboîtement des premières et deuxièmes entailles (411, 421) de sorte que chacune desdites premières et deuxièmes séries de lames (4) forme, à l'état assemblé desdites séries de lames, un empilement à claire-voie, et,
- pour la construction du fond (22) du bac (2), une étape d'insertion dans l'espace laissé libre entre deux lames (4) superposées des premières, ou respectivement, des deuxièmes séries de lames, d'une troisième série (51) de lames (5) reliant entre elles deux parois (21) latérales en regard.
